# EUROPÄISCHE PATENTSCHRIFT

(11) **EP 0 453 636 B1**
(45) Veröffentlichungstag und Bekanntmachung des Hinweises auf die Patenterteilung: **11.08.1993**
(21) Anmeldenummer: 90122241.4
(22) Anmeldetag: 21.11.1990
(51) Int. Cl.: A01K 5/02

(54) **Vorrichtung zur Selbstfütterung für Haustiere, insbesondere Schweine**
Selffeeder for domestic animals, in particular pigs
Mangeoire pour nourrir des animaux domestiques, en particulier des porcs

(30) Priorität: 24.04.1990 DE 4013008
(43) Veröffentlichungstag der Anmeldung: 30.10.1991
(73) Patentinhaber: ARATOWERK WALTER VON TASCHITZKI GmbH & CO. KG, D-51107 Köln (DE)
(72) Erfinder: von Taschitzki, Rainer, W-5000 Köln 91 (DE)
(74) Vertreter: Lippert, Hans-Joachim, Dipl.-Ing.

(56) Entgegenhaltungen:
- EP-A- 0 044 465
- DE-A- 2 158 285
- DE-A- 3 213 688
- DE-C- 103 103
- GB-A- 213 456

## Beschreibung

Die Erfindung bezieht sich auf eine Vorrichtung zur Selbstfütterung für Haustiere, insbesondere Schweine, mit schüttfähigem Futter, bestehend aus einem Futtertrog in einem Gehäuse und einem darüber angeordneten, zum Teil trichterförmigen Futterbehälter mit einer Öffnung im Boden sowie einer durch diese Öffnung hindurchgeführten Rüttelvorrichtung, mittels derer die Tiere eine kontrollierte Futterentnahme bewirken können, wobei die Rüttelvorrichtung mit einer Rüttelplatte versehen ist, welche größer ist als die Öffnung im Behälterboden.

Eine aus der DE-C-103 103 bekannte Vorrichtung zum Füttern von Pferden besteht aus einem Futtertrog und einem darüber angeordneten trichterförmigen Futterbehälter mit einer Öffnung im Boden. Durch diese Öffnung ist eine Entnahmevorrichtung hindurchgeführt, mittels derer die Tiere eine kontrollierte Futterentnahme bewirken können. Die Entnahmevorrichtung enthält eine in dem Trichter lose aufgehängte Stange, die am unteren Teil einen von unten in die Öffnung hineinragenden und als Kegel ausgebildeten Teller trägt, welcher lose drehbar befestigt ist. Die Stange und der Teller können dabei so eingestellt werden, daß zwischen der oberen Tellerfläche und der Öffnung im Boden des Futterbehälters ein geeigneter Zwischenraum entsteht. Durch eine durch das Tier hervorgerufene Bewegung des Tellers kann das Futter in den Futtertrog fallen.

Die besonderen Probleme einer solchen Fütterungsvorrichtung entstehen dadurch, daß die verschiedenen Futtermischungen, wie Mehl, Getreideschrot, Maisschrot und anderes mehr, hinsichtlich ihrer Körnungen als auch ihrer Feuchtigkeitsgehalte sehr unterschiedlich sein können, so daß einerseits ihre Rieselfähigkeit und andererseits ihre Neigung zu Verstopfungen im Futterbehälter ein gleichmäßiges Funktionieren der Vorrichtung und eine störungsfreie Versorgung der Tiere erschweren.

Desweiteren ist aus der DE-A-2158285 ein Futterautomat für die Aufzucht und Mast von Schweinen bekannt, welcher einen Vorratsbehälter enthält, der in eine unterhalb desselben angeordnete Futtermulde übergeht, die durch seitliche Begrenzungen in einzelne Futterplätze unterteilt ist. Der Vorratsbehälter umfaßt eine Rückwand, zwei Seitenwände und eine Vorderwand, wobei die Rückwand und die Vorderwand derart divergierend einander zugeordnet sind, daß sich der Vorratsbehälter in Richtung zur Futtermulde erweitert. Teile der Vorderwand sind als muldenförmige Einbuchtungen ausgebildet, die ebenfalls zur Rückwand divergierend senkrecht über die Vorderwand verlaufen, so daß die zu fütternden Tiere mit ihrem Rüssel unter den Vorratsbehälter reichen können. Auf diese Weise werden Futterverluste durch verstreuen des Futters vermieden. Eine vom Tier zu betätigende Entnahmevorrichtung ist nicht vorhanden.

Aufgabe der Erfindung ist es deshalb, eine Vorrichtung zur Selbstfütterung für Haustiere, insbesondere Schweine zu schaffen, die es den Tieren auch bei der Verfütterung von problematischen, schlecht rieselnden Futtermischungen ermöglicht, sich die gewünschten Portionen jederzeit nach eigenem Bedarf und jederzeit störungsfrei in den Trog rieseln zu lassen.

Die Erfindung zeichnet sich dadurch aus, daß die Vorderwand des Gehäuses oberhalb des Futtertroges eine auf Größe und Gestalt des Kopfes der zu fütternden Tierart abgestimmte Durchschlupföffnung aufweist, daß bei der Rüttelvorrichtung die beiden sich gegenüberstehenden Teile als Flächen, nämlich als Behälterboden und als Rüttelplatte ausgebildet sind, daß der Abstand der Flächen zwischen der Rüttelplatte und dem Behälterboden auf die jeweilige Korngröße des Futters abstimmbar ist, und daß die einander zugekehrten Oberflächen der Rüttelplatte und des Behälterbodens sich in ihrer Gestaltung so entsprechen, daß zwischen der Rüttelplatte und dem Behälterboden für eine mühlsteinartige Bewegung überall der gleiche Abstand erhalten bleibt.

Dabei ist die Rüttelplatte so angeordnet, daß sie in Ruheposition die Öffnung im Boden des Futterbehälters abdeckt, so daß kein Futter in den Trog durchrutschen kann; wenn aber die Tiere die Rüttelvorrichtung betätigen, entsteht ein durch die Erfindung ermöglichter mühlsteinartiger Effekt, welcher das Futter vom Zentrum der Bodenöffnung weg zum Rand der Rüttelplatte transportiert, von wo es nach und nach in den Trog fällt.

Eine Ausgestaltung der Erfindung ist dadurch gekennzeichnet, daß die Rüttelvorrichtung in Form einer Stange mittels zweier Halter axial drehbar gelagert ist, wobei die Rüttelplatte nach unten in den Trog hineinreichende Ansätze aufweist, welche es dem Tier ermöglichen, diese in eine partielle Rotationsbewegung zu versetzen.

Bei der Betätigung der Rüttelvorrichtung, indem die Tiere an den in den Trog hineinreichenden Ansätzen rütteln, entsteht ebenfalls ein mühlsteinartiger Effekt, so daß das Futter zum Rand der Rüttelplatte transportiert wird und anschließend in den Trog fällt.

Die Rüttelplatte kann unterhalb oder oberhalb der Öffnung im Boden des Futterbehälters angeordnet sein.

Die Abstimmbarkeit des Abstandes zwischen Behälterboden und Rüttelplatte auf die Korngröße des Futters bewirkt, daß die Bewegung der Rüttelplatte nicht durch Körner blockiert wird, die sich festgeklemmt haben, und daß andererseits Verklumpungen des Futters zerrieben werden. Das hat den Vorteil, daß auch feuchteres Futter, welches zur Bildung von Klümpchen neigt, von den Tieren gleichmäßig gut entnommen werden kann.

Die Erfindung wird anhand mehrerer in der Zeichnung dargestellter Ausführungsformen erläutert.

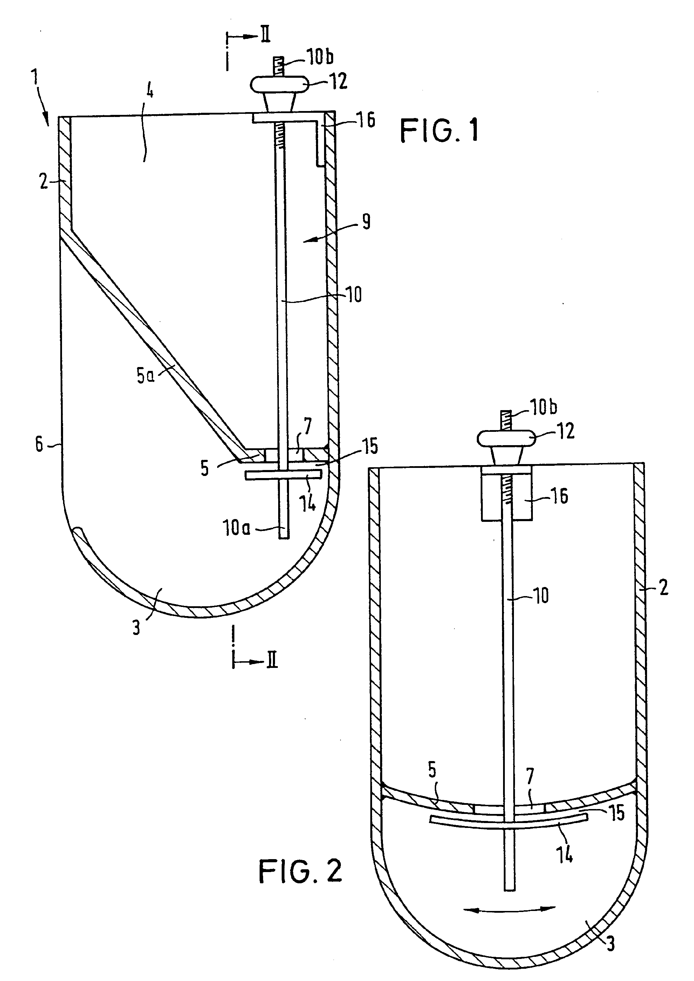

- Figur 1: zeigt eine beispielhafte Ausführungsform eines Selbstfütterungsgehäuses gemäß der Erfindung im Aufriß und im Schnitt;
- Figur 2: ist ein Längsschnitt durch das Gehäuse nach der Linie II-II der Figur 1;

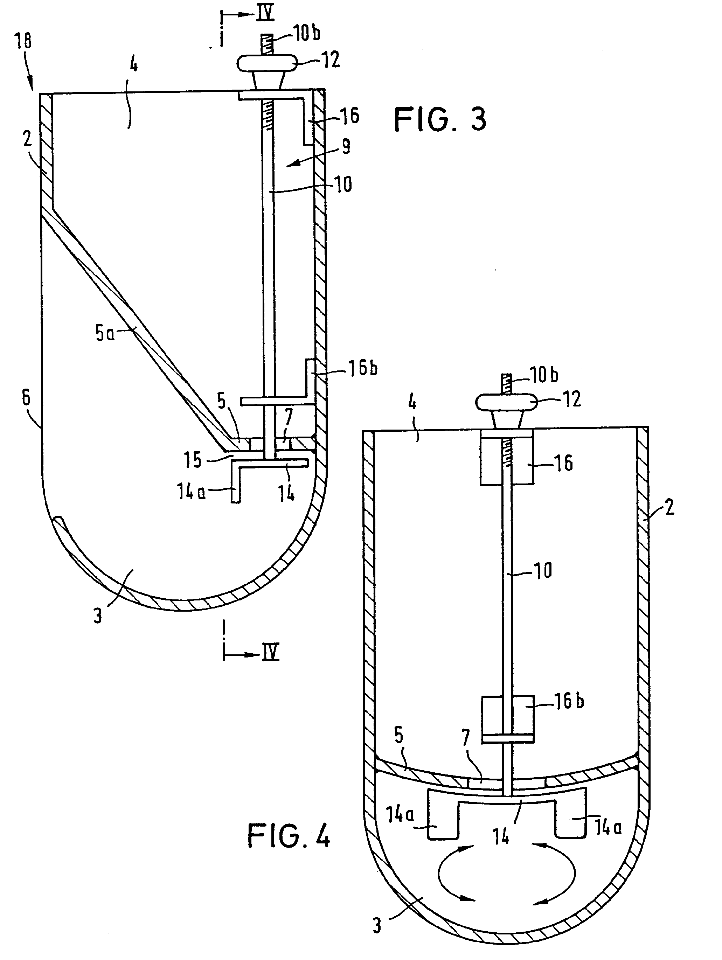

- Figur 3: zeigt eine weitere Ausführungsform des Selbstfütterungsgehäuses gemäß der Erfindung im Aufriß und im Schnitt;
- Figur 4: veranschaulicht einen Längsschnitt nach der Linie IV-IV der Figur 3.

Bei der Vorrichtung 1 zur Selbstfütterung für Haustiere, z.B. Schweine, sind bezeichnet mit:
2 ein Gehäuse,
3 ein Futtertrog,
4 ein Futterbehälter,
5 ein Behälterboden,
5a eine Trichterwand,
6 eine Durchschlupföffnung für den Kopf des Tieres,
7 eine Öffnung im Behälterboden 5 und
9 eine Rüttelvorrichtung.

Die Rüttelvorrichtung kann so ausgebildet sein, daß eine Rüttelplatte 14 entweder an einer pendelnden Rüttelstange 10 angeordnet ist, deren Ende 10a in den Trog 3 hinabreicht und von den Tieren hin und her bewegt werden kann, oder daß die Rüttelstange 10 außer einem Halter 16 mittels eines zweiten Rüttelstangenhalters 16b axial drehbar gelagert ist, wobei die Rüttelplatte 14 nach unten in den Trog 3 hineinreichende Ansätze 14a aufweist und von den Tieren damit in eine partielle Rotation versetzt werden kann.

Die Rüttelplatte 14 kann vorzugsweise unterhalb des Behälterbodens 5 angeordnet sein; je nach Art des Futters kann aber auch eine Anordnung oberhalb der Öffnung 7 des Behälterbodens 5 vorteilhaft sein. In jedem Fall entsprechen sich aber die einander zugekehrten Oberflächen der Rüttelplatte 14 und des Behälterbodens 5 in ihrer Gestalt so, daß sie in der Bewegung überall gleichen Abstand 15 voneinander bewahren.

Für die Abstimmung des Abstandes 15 der Rüttelplatte 14 vom Behälterboden 5 ist das obere Ende 10b der Rüttelstange 10 mit einem Gewinde versehen und mittels eines Schraubgriffes 12 in einem Rüttelstangenhalter 16 höhenverstellbar gelagert.

## Patentansprüche

1. Vorrichtung zur Selbstfütterung für Haustiere, insbesondere Schweine, mit schüttfähigem Futter, bestehend aus einem Futtertrog (3) in einem Gehäuse (2) und einem darüber angeordneten, zum Teil trichterförmigen Futterbehälter (4) mit einer Öffnung (7) im Boden (5) sowie einer durch diese Öffnung hindurchgeführten Rüttelvorrichtung (9), mittels derer die Tiere eine kontrollierte Futterentnahme bewirken können, wobei die Rüttelvorrichtung (9) mit einer Rüttelplatte (14) versehen ist, welche größer ist als die Öffnung (7) im Behälterboden (5), **dadurch gekennzeichnet,** daß die Vorderwand des Gehäuses (2) oberhalb des Futtertroges (3) eine auf Größe und Gestalt des Kopfes der zu fütternden Tierart abgestimmte Durchschlupföffnung (6) aufweist, daß bei der Rüttelvorrichtung (9) die beiden sich gegenüberstehenden Teile als Flächen, nämlich als Behälterboden (5) und als Rüttelplatte (14) ausgebildet sind, daß der Abstand (15) der Flächen zwischen der Rüttelplatte (14) und dem Behälterboden (5) auf die jeweilige Korngröße des Futters abstimmbar ist, und daß die einander zugekehrten Oberflächen der Rüttelplatte (14) und des Behälterbodens (5) sich in ihrer Gestaltung so entsprechen, daß zwischen der Rüttelplatte (14) und dem Behälterboden (5) für eine mühlsteinartige Bewegung überall der gleiche Abstand (15) erhalten bleibt.

2. Vorrichtung nach Anspruch 1, **dadurch** **gekennzeichnet**, daß die Rüttelvorrichtung (9) in Form einer Stange (10) mittels zweier Halter (16, 16b) axial drehbar gelagert ist, wobei die Rüttelplatte (14) nach unten in den Trog (3) hineinreichende Ansätze (14a) aufweist, welche es dem Tier ermöglichen, diese in eine partielle Rotationsbewegung zu versetzen.

3. Vorrichtung nach Anspruch 1 oder 2, **dadurch gekennzeichnet,** daß die Rüttelplatte (14) unterhalb oder oberhalb der Öffnung (7) im Boden (5) des Futterbehälters (4) angeordnet ist.

## Claims

1. Self-feeding apparatus for feeding domestic animals, especially pigs, with bulk feed, consisting of a feeding trough (3) in a housing (2) and a feed container (4) mounted thereabove and being partly funnel-shaped, said feed container (4) having an opening (7) in its base (5) and vibrating means (9) extending through this opening (7), to enable the animals to take out feed in a controlled manner, the vibrating means (9) being provided with a vibratory plate (14) which is larger than the opening (7) in the container base (5), characterized in that the front wall of the housing (2) has a slip-through opening (6) above the feed trough (3), which is adapted to the size and shape of the head of the animal species to be fed, in that the two facing portions of the vibrating means (9) are formed as surfaces i.e. as a container base (5) and as a vibratory plate (14), in that the distance (15) of the surfaces between the vibratory plate (14) and the container base (5) is adjustable to the respective grain size of the feed, and in that the contours of the facing surfaces of the vibratory plate (14) and the container base (5) correspond to each other in such a way that in order to achieve a millstone-like movement the same distance (15) between the vibratory plate (14) and the container base (5) is maintained throughout.

2. Apparatus as claimed in Claim 1, characterized in that the vibrating means (9) has the form of a rod which is axially rotatable by means of two brackets (16, 16b), the vibratory plate (14) having projections (14a) extending downwards into the trough (3), said projections enabling the animal to effect a partial rotary movement of the vibratory plate (14).

3. Apparatus as claimed in Claim 1 or 2, characterized in that the vibratory plate (14) is mounted below or above the opening (7) in the base (5) of the feed container (4).

## Revendications

1. Mangeoire permettant à des animaux domestiques tels des porcs de se nourrir seuls avec des aliments en particules et comprenant un corps (2) avec une auge (3) surmontée d'une trémie (4) à aliments partiellement en forme d'un entonnoir dont le fond (5) est pourvu d'un orifice (7) ainsi que d'un dispositif à secousse (9) qui la traverse et à l'aide duquel les animaux peuvent obtenir un prélèvement contrôlé d'aliments et qui est équipé d'un plateau à secousse (14) dont la taille est plus grande que celle de cet orifice du fond de la trémie, mangeoire caractérisée en ce que la paroi antérieure du corps (2) au-dessus de l'angle (3) est munie d'une traversée (6) commensurée à la dimension et à la taille de la tête des animaux à nourrir, en ce que les deux parties coopérantes de ce dispositif (9), à savoir ce fond (5) et ce plateau (14) sont relativement planes, en ce que l'intervalle séparant ces parties planes entre plateau (14) et fond (5) est adaptable au calibre des particules d'aliments et en ce que la conformation des surfaces en vis-à-vis du plateau (14) et du fond (5) est choisie de manière à ce qu'elles conservent un intervalle pratiquement constant afin d'avoir un mouvement de meule.

2. Mangeoire selon la revendication 1, caractérisée en ce que ce dispositif (9) se présente à la manière d'une barre (10) articulée tournante axialement à l'aide d'un gousset (16, 16b) double afin que le plateau (14) se présente à la façon d'un appendice saillant vers le bas dans l'angle (3) et auquel les animaux peuvent communiquer une rotation partielle.

3. Mangeoire selon la revendication 1 ou 2, caractérisée en ce que le plateau (14) est placé au-dessous ou au-dessus de l'orifice (7) du fond (5) de la trémie (4).
